# EUROPÄISCHE PATENTSCHRIFT

(11) **EP 3 392 650 B1**
(45) Veröffentlichungstag und Bekanntmachung des Hinweises auf die Patenterteilung: **31.08.2022**
(21) Anmeldenummer: 18176182.6
(22) Anmeldetag: 15.05.2014
(51) Int. Cl.: G01N 23/2254

(54) **VORRICHTUNG ZUR SPEKTROSKOPISCHEN ANALYSE**
DEVICE FOR SPECTROSCOPIC ANALYSIS
DISPOSITIF D'ANALYSE SPECTROSCOPIQUE

(30) Priorität: 16.05.2013 DE 102013209104
(43) Veröffentlichungstag der Anmeldung: 24.10.2018
(62) Teilanmeldung aus: 14168505.7
(73) Patentinhaber: Carl Zeiss Microscopy GmbH, 07745 Jena (DE)
(72) Erfinder: CORRENS, Nico, 99425 Weimar (DE); RODE, Michael, 07743 Jena (DE)
(74) Vertreter: Carl Zeiss AG - Patentabteilung

(56) Entgegenhaltungen:
- EP-A1- 1 726 930
- EP-A2- 2 317 536
- DE-A1-102010 005 723
- JP-A- S60 122 332
- US-A- 4 490 040
- US-A1- 2010 014 076
- DE METS M: "Improved cathodoluminescence detection system", JOURNAL OF PHYSICS E; SCIENTIFIC INSTRUMENTS,, Bd. 7, Nr. 12, Dezember 1974 (1974-12), Seiten 971-972, XP001411501,
- CARLSSON L ET AL: "An efficient apparatus for studying cathodoluminescence in the scanning electron microscope", JOURNAL OF PHYSICS E; SCIENTIFIC INSTRUMENTS,, vol. 7, 1974, pages 98-99, XP001411324,
- SANCROTTI M ET AL: "ULTRAVIOLET INVERSE PHOTOEMISSION SPECTROGRAPH WITH PARALLEL MULTICHANNEL ISOCHROMAT ACQUISITION", REVIEW OF SCIENTIFIC INSTRUMENTS, AIP, MELVILLE, NY, US, vol. 62, no. 3, March 1991 (1991-03), pages 639-642, XP000224304, ISSN: 0034-6748, DOI: 10.1063/1.1142062

## Beschreibung

Die Erfindung betrifft eine Vorrichtung zur spektrometrischen Analyse von lumineszierenden Proben.

Unter Lumineszenz versteht man die Emission von Licht, also elektromagnetischer Strahlung mit Wellenlängen im sichtbaren oder benachbarten Wellenlängenbereich (Infrarot und Ultraviolett). Um Lumineszenz beobachten zu können, wird ein Material, das lumineszierende Eigenschaften besitzt, durch Excitationsvorgänge dazu angeregt, Licht zu emittieren. Die Anregung kann beispielsweise durch die Bestrahlung mit Photonen oder Elektronen erfolgen. Im Falle der Anregung durch Photonen, zum Beispiel mittels UV-Licht, spricht man von Photolumineszenz. Als Kathodolumineszenz (KL) wird Lumineszenz bezeichnet, wenn die Lichtemission durch das Auftreffen von Elektronen angeregt wurde, die zuvor von einer Kathode emittiert und in einem elektrischen Feld beschleunigt wurden. Die Dauer der Lichtemission kann sehr unterschiedlich sein und zwischen wenigen Millisekunden und einigen Stunden betragen: Bei schnell abklingenden Lumineszenzerscheinungen spricht man von Fluoreszenz, bei lang anhaltender Lichtemission von Phosphoreszenz.

Die Entstehung von Lumineszenzphänomenen bei Halbleitern und anorganischen Kristallen lässt sich mit dem Energiebändermodell der Halbleiterphysik erklären. Gemäß diesem Modell werden die Energiezustände, in denen sich Elektronen befinden können, zu Bändern zusammengefasst, wobei ein Valenzband und ein Leitungsband unterschieden werden. Wenn Primärteilchen, also beispielsweise Photonen oder Elektronen, auf dem Probenmaterial auftreffen, kann Energie von einem einfallenden Primärteilchen auf ein Elektron des Probenmaterials übertragen werden. Wird die Energie auf ein Valenzelektron übertragen, so kann dieses Elektron in einen Energiezustand angehoben werden, der dem Leitungsband zugeordnet ist. Im Falle der Fluoreszenz rekombiniert das Leitungselektronen jedoch sofort wieder mit einer Elektronenleerstelle im Valenzband, fällt also auf das Energieniveau des Valenzbandes zurück. Dabei wird Energie frei gesetzt, die in Form von Lichtquanten abgestrahlt wird, deren Energie der Übergangsenergie entspricht. Neben solchen direkten Band-Band-Übergängen können auch indirekte Bandübergänge auftreten, bei denen ein Teil der frei werdenden Energie in Form von Wärme abgegeben wird (nicht-strahlende Rekombination der Ladungsträger).

Auch bei organischen Molekülen kann die Entstehung von Lumineszenz damit erklärt werden, dass Elektronen, die zuvor durch Anregungsvorgänge von einem energetischen Grundzustand in einen angeregten Zustand angehoben worden sind, wieder in den Grundzustand zurückfallen und dabei Licht emittieren.

Das abgestrahlte Lumineszenzlicht kann detektiert und dazu benutzt werden, Bilder der Probe zu erzeugen oder die Materialeigenschaften der Probe zu analysieren. So lassen sich vorzugsweise anhand von Intensität, spektraler Zusammensetzung und zeitabhängiger Veränderung der Intensität des Lumineszenzlichts Rückschlüsse auf die Eigenschaften des lumineszierenden Materials ziehen. Auf diese Weise können beispielsweise Rekombinationszentren bestimmt werden, oder es können Gitterdefekte, Verunreinigungen, Phasenbildungen oder Inhomogenitäten bei der Dotierstoffverteilung identifiziert werden. Typische Beispiele für Proben, bei denen Lumineszenzphänomene untersucht werden können, sind HalbleiterBauelemente, Keramiken (z.B. technische Katalysatoren), anorganische Kristalle oder biomedizinische Proben (z.B. Gewebeproben). Auch organische Verbindungen lassen sich untersuchen, um beispielsweise chemische Defekte in der Polymerstruktur von Kunststoffen erkennen zu können, da von solchen Defekten später unerwünschte Brüche der Polymerketten ausgehen können.

Eine integrale Detektion des Lumineszenzlichts, d.h. die Detektion eines Summensignals, liefert allerdings nur qualitative Ergebnisse, da die Ursache für eine Veränderung des Summensignals in der gleichzeitigen Veränderung mehrerer Parameter liegen kann. Vorteilhafter ist es daher, das Lumineszenzlicht winkelaufgelöst, ortsaufgelöst und zeitaufgelöst zu detektieren und dabei das jeweilige Wellenlängenspektrum der frei gesetzten Photonen zu erfassen. Die spektrale Analyse erlaubt es, den für die Lichtemission verantwortlichen Elektronenübergang zu identifizieren, da über Wellengleichung und Plancksches Wirkungsquantum ein direkter Zusammenhang zwischen Übergangsenergie und Wellenlänge der emittierten Photonen besteht.

Da Licht in alle Richtungen abgestrahlt wird, sollte ein möglichst großer Raumwinkel über der Probe erfasst werden, damit möglichst viele der aus dem Probenmaterial austretenden Photonen detektiert werden. Die winkelaufgelöste Detektion erlaubt Rückschlüsse auf Materialeigenschaften und Textur der Probe, da angenommen werden kann, dass Photonen, die aus unterschiedlichen Tiefen einer strukturierten Probe stammen, in verschiedenen Raumwinkeln abgestrahlt werden. Die zeitaufgelöste Detektion ermöglicht es, die Kinetik der Ladungsträger-Rekombinationen zu erfassen, also beispielsweise Lebensdauer, Relaxationszeiten, Streumechanismen oder Einfangzeiten. Vorteilhaft ist es außerdem, eine hohe Ortsauflösung zu erreichen. Dies ist beispielsweise bei der Kathodolumineszenz möglich, da der einfallende Elektronenstrahl auf der Probenoberfläche fokussiert werden kann, so dass sich üblicherweise eine Ortsauflösung von unter einem Mikrometer erreicht lässt.

Um die spektrale Zusammensetzung zu untersuchen, werden in der Regel Spektrometer verwendet, die typischerweise einen Eintrittsspalt (Eintrittsapertur), ein dispergierendes Element und einen Detektor umfassen. Als dispergierendes Element kann ein Prisma oder ein Gitter dienen. Wenn das zu analysierende Licht das dispergierende Element passiert, werden die spektralen Anteile des Lichts in unterschiedliche Raumrichtungen abgelenkt: es entsteht ein Spektrum das mittels des Detektors abgebildet und/oder gespeichert und zu Analysezwecken verarbeitet werden kann. Alternativ können auch Filter-basierte Spektrometer verwendet werden.

Beim Durchgang des Lichtstrahls durch ein Beugungsgitter werden Intensitätsmaxima der nullten Beugungsordnung und höherer Beugungsordnungen erzeugt. Unter dem Maximum der nullten Ordnung ist der Teil des Lichts zu verstehen, der das Beugungsgitter passiert, ohne spektral aufgeteilt zu werden. In herkömmlichen Spektrometern wird die nullte Ordnung jedoch nicht ausgewertet, sondern durch Lichtfallen unterdrückt, um störende Einflüsse auf die spektrometrische Messung zu verhindern.

Üblicherweise müssen Spektrometer während des Betriebs laufend referenziert werden, um Änderungen der Umgebungseinflüsse - beispielsweise Temperaturschwankungen -, die sich negativ auf die Messung auswinken würden, zu kompensieren. Um die Referenzierung auszuführen, ist es üblich, die Messung in bestimmten Zeitabständen zu unterbrechen und die Messanordnung so zu verändern, dass ein Minimalwert (Dunkelabgleich) und ein Maximalwert (Hellabgleich) definiert werden können, zwischen denen sich dann alle zukünftigen Messwerte einordnen lassen.

### Kurze Beschreibung des verwandten Stands der Technik

DE 19731226 beschreibt ein abbildendes KL-Spektrometer zur Aufnahme von KL-Bildern und KL-Spektren in elektronenoptischen Geräten.

Weiterhin ist eine kombinierte Vorrichtung aus Lichtmikroskop und Elektronen- oder Ionenmikroskop bekannt, die eine lichtsammelnde Vorrichtung und einen Detektor zur Detektion von Lumineszenzlicht umfasst.

Außerdem sind Verfahren vorgeschlagen worden, bei denen ein Primärstrahl emittiert und auf die Probe gerichtet wird und das aus dem Probenmaterial frei gesetzte Lumineszenzlicht aufgefangen wird.

Außerdem sind Verfahren und Vorrichtungen zur zeitaufgelösten Spektroskopie mittels PMD-Sensor bekannt, sowie die Verwendung von kompakten Miniaturspektrometern.

Ferner sind Anordnungen von Spektralfluorometern beschrieben worden (US 4 490 040), sowie Vorrichtungen zur Untersuchung von Kathodoluminezenz in Rasterelektronenmikroskopen (Carlsson L., & von Essen C.G. (1974), Journal of Physics E: Scientific Instruments, Bd. 7, 1974, Seiten 98 - 99.

Als relevanter Stand der Technik können die folgende Dokumente angesehen werden:
- WO 2012/008836AS
- DE 102009046211
- DE 19731226
- SANCROTTI et al, "Ultraviolet inverse photomemission spectrograph with parallel multichannel isochromat acquisition", Review of Scientific Instruments, Vol. 62 No. 3, March 1991, p. 639-642, doi: 10.1063/1.1142062 (XP000224304).

### Überblick über die Erfindung

Es ist Aufgabe der vorliegenden Erfindung, Vorrichtungen vorzuschlagen, mit denen das Wellenlängenspektrum von Lumineszenzlicht detektiert werden kann. Vorzugsweise werden dabei die detektierten Photonen winkelaufgelöst erfasst. Alternativ werden die detektierten Photonen gleichzeitig ortsaufgelöst und winkelaufgelöst erfasst.

Diese Aufgabe wird erfindungsgemäß mit einer Vorrichtung mit den Merkmalen des Anspruchs Ansprüche 1 gelöst. Vorteilhafte Ausgestaltungen der Erfindung sind durch die abhängigen Ansprüche gegeben.

Die teilchenoptische Vorrichtung zur Erzeugung des Lumineszenzlichts in der Probe kann ein Rasterelektronenmikroskop (REM), ein Ionenmikroskop mit fokussiertem Ionenstrahl (FIB), oder ein Kombinationsgerät sein, das zwei oder mehr der genannten teilchenoptischen Vorrichtungen umfasst.

Gemäß der vorliegenden Erfindung umfasst die teilchenoptische Vorrichtung eine Teilchenstrahlquelle.

Die Teilchenstrahlquelle erzeugt einen Primärteilchenstrahl, der auf die Probe gerichtet ist. Die Probe besteht aus mindestens einem chemischen Stoff, der lumineszierende Eigenschaften aufweist. Die Teilchen des Primärteilchenstrahls, die auf der Probe auftreffen, treten in Wechselwirkung mit dem lumineszenzfähigen Probenmaterial. Dadurch werden aus der Probe Wechselwirkungsprodukte in Form von Photonen freigesetzt. Da der Focus des Primärteilchenstrahl in der Regel sequentiell über die Probenoberfläche geführt wird, wird das Lumineszenzlicht jeweils nur am Auftreffort des Primärteilchenstrahls emittiert, so dass das Lumineszenzlicht ortsaufgelöst detektiert werden kann.

Prinzipiell kann jede Stelle der Probe Licht emittieren, so dass jede Stelle der Probe als eine punktförmige Lichtquelle aufgefasst werden kann. Ausgehend von einer Lichtquelle werden Photonen potentiell in alle Richtungen abgestrahlt, wobei die Photonen einer Vielzahl von möglichen Flugbahnen folgen können. Diese Flugbahnen lassen sich jeweils durch einen Höhenwinkel hn und einen azimutalen Winkel an beschreiben. Da es unendlich viele mögliche Flugbahnen gibt, ist es vorteilhaft, ähnlich verlaufende Flugbahnen - das heißt: Flugbahnen, die mit gleichen, annähernd gleichen oder ähnlichen Raumwinkeln beschrieben werden können - zu gruppieren, indem definiert wird, dass diese Flugbahnen zum selben Raumwinkelbereich der Flugbahnen gehören. Die Mittelpunkte der verschiedenen Raumwinkelbereiche liegen unter jeweils verschiedenen Winkeln, bezogen auf den einfallenden Primärteilchenstrahl, und zwar sowohl in Richtung des Höhenwinkels (Vertikalwinkel) als auch in Richtung des Azimuts (Horizontalwinkel).

Mit einer Vorrichtung gemäß der vorliegenden Erfindung ist es möglich, Photonen, die sich in verschiedenen Raumwinkelbereichen bewegen, zu unterscheiden und getrennt voneinander zu detektieren. Zu diesem Zweck umfasst die Vorrichtung eine Vielzahl von Lichtaufnahmeelementen, die derart über der Probenoberfläche angeordnet sind, dass möglichst viele Raumwinkelbereiche erfasst werden können und dass jedes Lichtaufnahmeelement einem bestimmten Raumwinkelbereich der Flugbahnen zugeordnet ist. Die Lichtaufnahmeelemente sind geeignet, Photonen aufzunehmen und weiterzuleiten. Es vorteilhaft, wenn jedes Lichtaufnahmeelement mit einem Leitungselement verbunden ist. Es ist aber auch denkbar, dass zwei oder mehr Lichtaufnahmeelemente mit einem Leitungselement verbunden sind. Die Leitungselemente sind geeignet, die von einem Lichtaufnahmeelement aufgenommenen Photonen zu einer Auswerteeinheit weiterzuleiten, mit der das Wellenlängenspektrum der Photonen analysiert werden kann. Das bedeutet also, dass über die direkte Zuordnung von Lichtaufnahmeelement, Leitungselement und Auswerteeinheit zueinander jede Auswerteeinheit einem Raumwinkelbereich der Flugbahnen zugeordnet ist. Die Auswerteeinheiten können als die Kanäle eines Mehrkanalspektrometers ausgebildet sein. Unter einem mehrkanaligen Spektrometer - manchmal auch als mehrstrahliges Spektrometer bezeichnet- ist ein Spektrometer zu verstehen, das mehrere vollständige Spektren parallel aufzeichnen kann und beispielweise in Form eines mehrkanaligen Offner-Spektrometers ausgebildet ist. Spektrometer in der Bauweise nach Offner sind seit Längerem bekannt und umfassen typischerweise einen Eintrittsspalt, zwei konkave Spiegel und ein zwischen den Spiegeln angeordnetes Beugungsgitter, das auf einem konvexen Spiegel aufliegt. Die Erfindung ist jedoch nicht auf ein Spektrometer in Offner-Bauweise beschränkt, sondern kann auch mit jedem anderen mehrkanaligen Spektrometer ausgeführt werden, wobei die Signalauslese simultan oder zeitversetzt erfolgen kann. Alternativ können die Auswerteeinheiten als eine Vielzahl von miniaturisierten Spektrometern ausgebildet sein, so dass in diesem Fall jedem Lichtaufnahmeelement ein Miniaturspektrometer zugeordnet ist.

Mit einer Vorrichtung gemäß der vorliegenden Erfindung ist es möglich, das Wellenlängenspektrum der detektierten Photonen aufzuzeichnen. Für die spektrale Messung können Spektrometer eingesetzt werden, die beispielsweise den Wellenlängenbereich von UV bis NIR (185 nm - 2500 nm) erfassen. Unter Vakuumbedingungen kann es vorteilhaft sein, mit Wellenlängen unter 185 nm, beispielsweise 120 nm oder weniger zu arbeiten, oder mit Wellenlängen über 2500 nm, beispielweise mit 10.000 nm.

Durch Verwendung von zeitauflösenden Photonendetektoren ist es außerdem möglich, die Spektren zusätzlich zeitaufgelöst zu detektieren.

Anschließend können die erhaltenen Wellenlängenspektren auf Basis der chemischen Statistik (Chemometrie) durch mathematische Algorithmen verrechnet und mithilfe vorhandener Datenbanken analysiert und bewertet werden. Die dabei angewendeten Methoden orientieren sich an den Anforderungen der jeweiligen Applikation. Eine weitere vorteilhafte Ausführungsform umfasst ein erstes Spektrometer, das den Strahlungsanteil ausnutzt, der in höherer Ordnung, also beispielsweise erster, zweiter oder dritter Ordnung, gebeugt wird. Außerdem umfasst diese Ausführungsform ein zweites Spektrometer, das den Strahlungsanteil der nullten Beugungsordnung ausnutzt. Der Strahlungsanteil der nullten Ordnung bleibt in herkömmlichen spektrometrischen Messaufbauten üblicherweise ungenutzt, obwohl dieser Strahlungsanteil die gesamte spektrometrische Information enthält und ungefähr 50 % der eingestrahlten Energie ausmacht. Durch Nutzung des Intensitätsmaximums der nullten Beugungsordnung kann das zweite Spektrometer zur gleichen Zeit wie das erste Spektrometer betrieben werden, ohne dass ein Leistungsverlust beim Betrieb des ersten Spektrometers auftritt. Ein weiterer Aspekt der Erfindung umfasst die simultane oder zeitnahe Referenzierung der gemessenen Spektren. Dabei erfolgt die Referenzierung vorteilhafterweise innerhalb eines Zeitfensters, das kleiner ist als das Zeitfenster, in dem eine Veränderung des Messaufbaus, die eine Kompensierung erfordern würde, erwartet wird. Besonders vorteilhaft ist es, wenn die spektroskopische Messung zur Referenzierung nicht unterbrochen wird.

### Ausführungsbeispiele

Ausführungsbeispiele der Erfindung werden nachfolgend anhand von Figuren erläutert. Hierbei werden Komponenten , die sich hinsichtlich ihrer Struktur und Funktion entsprechen, mit Bezugszeichen versehen, die die gleichen Ziffern aufweisen, zur Unterscheidung jedoch mit einem zusätzlichen Buchstaben ergänzt sind.
Figur 1 zeigt das Schema einer Vorrichtung im Schnitt.
Figur 2 zeigt schematisch eine vorteilhafte Ausführungsform im Schnitt.
Figur 3 zeigt schematisch eine weitere vorteilhafte Ausführungsform im Schnitt.
Figur 4 zeigt schematisch vorteilhafte Ausgestaltungen der Lichteintrittsöffnungen im Schnitt.
Figur 5a und 5b zeigen schematisch eine weitere vorteilhafte Ausführungsform der Vorrichtung.

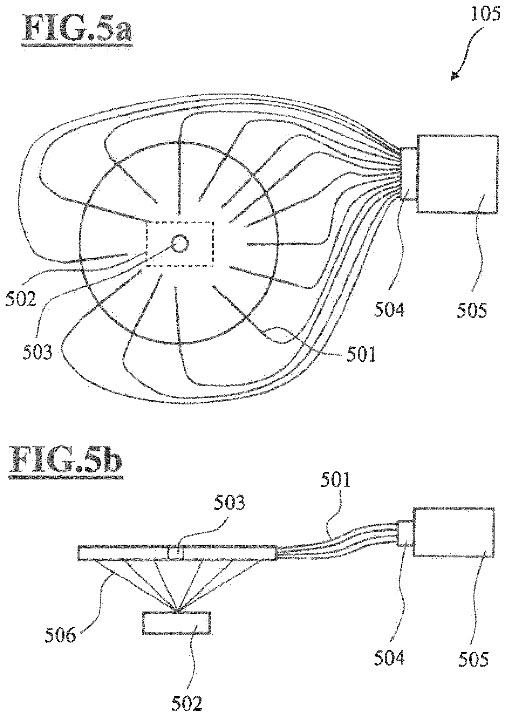

Fig. 5a zeigt die Draufsicht, Fig. 5b eine Schnittansicht.

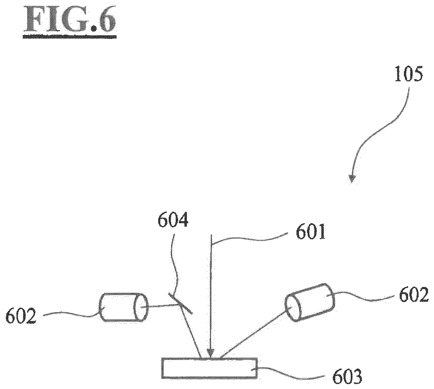

Figur 6 zeigt schematisch eine weitere vorteilhafte Ausführungsform in der Schnittansicht.

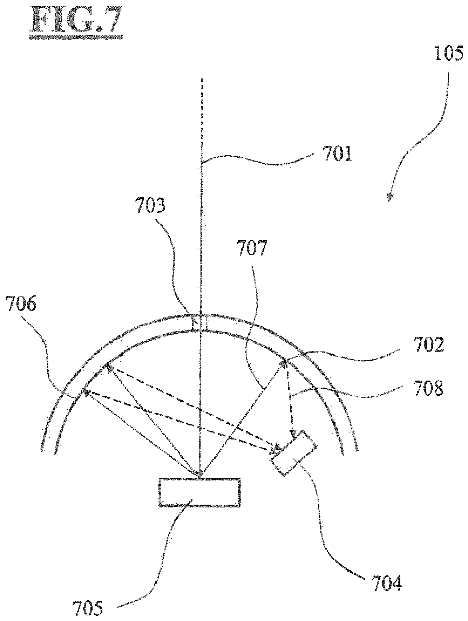

Figur 7 zeigt schematisch die erfindungsgemäße Vorrichtung im Schnitt.

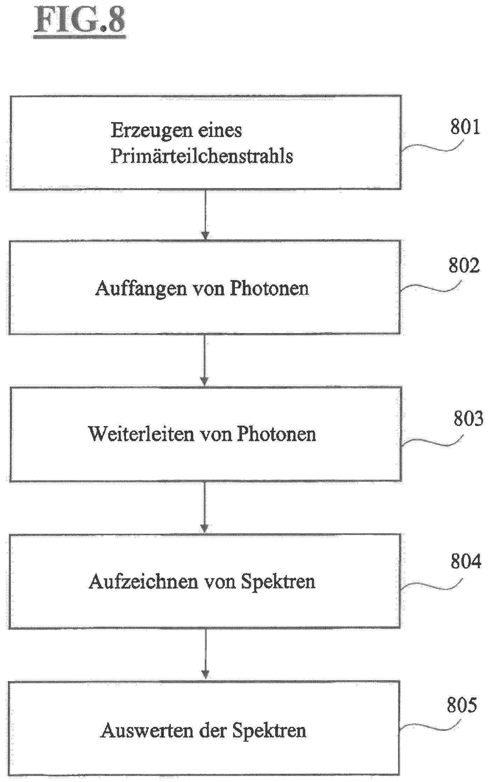

Figur 8 zeigt ein Flussdiagramm eines erfindungsgemäßen Verfahrens.

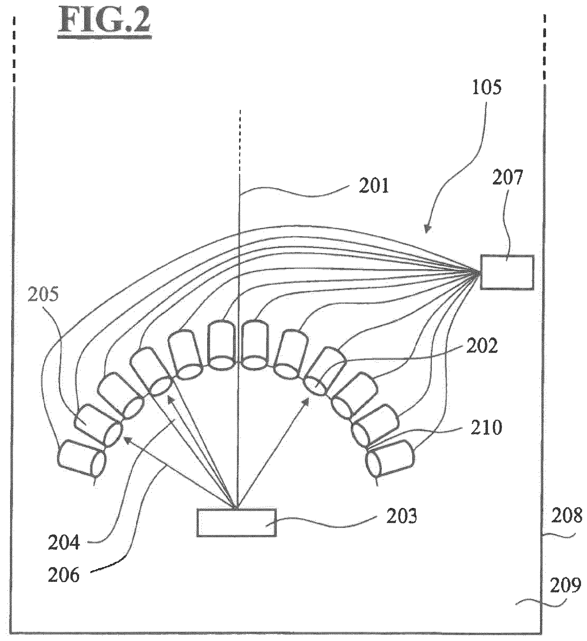

In den Figuren 2, 3 und 7 ist beispielhaft eine Schnittebene dargestellt, wobei die Ansicht in einer weiteren, zur dargestellten Schnittebene senkrecht stehenden Schnittebene (nicht gezeigt) gleich oder ähnlich aussehen würde.

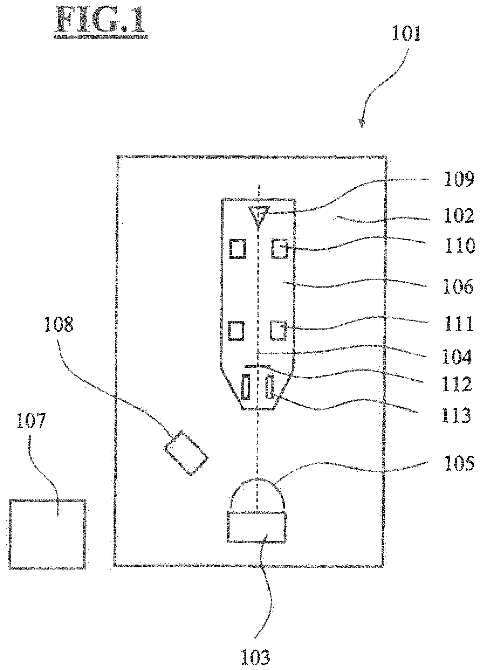

Die Ausführungsformen, die in den Figuren 1 bis 6 dargestellt sind, dienen lediglich der Veranschaulichung, da sie von der vorliegenden Erfindung nicht umfasst sind.

Figur 1 zeigt schematisch ein spezielles Ausführungsbeispiel, das nicht von der Erfindung umfasst ist. In Figur 1 ist eine teilchenoptische Vorrichtung 101 dargestellt, die als Elektronenstrahlgerät, beispielsweise als Rasterelektronenmikroskop, ausgebildet sein kann. Die teilchenoptische Vorrichtung 101 verfügt über eine Teilchenstrahlquelle 109 die sich in einer teilchenoptischen Säule 106 befindet und einen Primärteilchenstrahl 104 erzeugt, der einer Beschleunigungsspannung ausgesetzt wird. Der Primärteilchenstrahl 104 ist auf die Probe 103 gerichtet. Der Primärteilchenstahl 104 wird mithilfe von Linsensystemen 110, 111 gebündelt. Nach Passieren einer Aperturblende 112 wird der Fokus des Teilchenstrahls mittels eines Ablenksystems 113 auf die zu untersuchende Probe 103 gelenkt und zeilenförmig über die Oberfläche der Probe 103 bewegt. Vorteilhafterweise kann der Primärteilchenstrahl 104 moduliert werden, beispielsweise indem er aus- und eingeschaltet werden kann oder indem die mittlere Energie der Primärteilchen variiert werden kann. Die Probe 103 besteht aus Material, das lumineszierende Eigenschaften aufweist und befindet sich auf einem verfahrbaren Probentisch innerhalb einer Probenkammer 102, in der Vakuumbedingungen herrschen und die zur Aufnahme einer Probe 103 ausgebildet ist. Die Vorrichtung 101 umfasst weiterhin eine Detektionsvorrichtung 105, die geeignet ist, die aus der Probe 103 frei gesetzten Photonen zu detektieren. Die detektierten Photonen werden zu einem Analysesystem 107 weitergeleitet und dort ausgewertet.

In besonders vorteilhaften Ausführungsformen umfasst die teilchenoptische Vorrichtung außerdem mindestens einen weiteren Detektor 108, mit dessen Hilfe Wechselwirkungsprodukte, die durch die Wechselwirkung von Primarteilchenstrahl 104 und Probenmaterial 103 entstehen, detektiert werden können. Außer Photonen können auch andere Wechselwirkungsprodukte entstehen, beispielsweise Sekundärelektronen (SE) oder Rückstreuelektronen (BSE). Üblicherweise werden zur Detektion dieser Wechselwirkungsprodukte ein BSE-Detektor und/oder ein SE-Detektor verwendet, je nachdem ob Rückstreuelektronen (BSE) und/oder Sekundärelektronen (SE) zur Bilderzeugung genutzt werden sollen. Es ist auch denkbar, weitere Wechselwirkungsprodukte mit anderen geeigneten Detektoren, beispielsweise einem Röntgendetektor, zu detektieren.

Die Erfindung kann auch mit einer teilchenoptischen Vorrichtung ausgeführt werden, die als Ionenstrahlgerät oder Zweistrahlmikroskop ausgebildet ist. Ionenstrahlgeräte und Elektronenstrahlgeräte sind grundsätzlich ähnlich aufgebaut. Ionenstrahlgeräte weisen jedoch - im Unterschied zu Elektronenstrahlgeräten - als Teilchenstrahlquelle anstelle einer Elektronenquelle eine Ionenquelle auf und anstelle von magnetischen Linsen oder kombinierten elektrostatisch-magnetischen Linsen nur elektrostatische Linsen. Außerdem müssen je nach Polarität der Ionen natürlich auch die Polaritäten der an die verschiedenen Bauteile angelegten Potenziale und Potenzialdifferenzen entsprechend angepasst sein. Unter einem Zweistrahlmikroskop ist ein Kombinationsgerät aus Elektronenstrahlgerät und Ionenstrahlgerät zu verstehen. Ein Zweistrahlmikroskop verfügt über zwei Teilchenstrahlquellen, die Primärteilchenstrahlen erzeugen, und zwar eine Elektronenquelle, die sich in einer elektronenoptischen Säule befindet und die einen Elektronenstrahl erzeugen kann und eine Ionenquelle, die sich in einer ionenoptischen Säule befindet und die einen Ionenstrahl erzeugen kann.

Figur 2 zeigt eine vorteilhafte Ausführungsform der Vorrichtung, die nicht von der Erfindung umfasst ist. Die Detektionsvorrichtung 105 umfasst eine Vielzahl von Lichtaufnahmeelementen 202 und befindet sich innerhalb einer evakuierten Probenkammer 209, welche von einer Wand 208 begrenzt wird. Die Lichtaufnahmeelemente 202 sind über der Probe 203 angeordnet und als Sammeloptiken ausgebildet. Dabei kann eine Sammeloptik als Freistrahloptik oder als Faseroptik ausgebildet sein. Als besonders vorteilhaft hat es sich erwiesen, wenn die Lichtaufnahmeelemente 202 derart angeordnet sind, dass sie eine Halbkugel-Oberfläche über der Oberfläche der Probe 203 bilden. Mit anderen Worten: die Lichtaufnahmeelemente 202 sind - wie in Figur 2 im Schnitt dargestellt - auf einem Segment einer Kugelfläche angeordnet. Besonders vorteilhaft ist es, wenn die auf dem Segment der Kugelfläche zwischen den Lichtaufnahmeelementen 202 liegenden Zwischenflächen 210 aus lichtabsorbierendem Material ausgeführt sind, so dass Streulichteffekte vermieden werden. Vorzugsweise im oder nahe am Zentrum des Segments der Kugelfläche ist eine Öffnung ausgespart, die sich in der Verlängerung der optischen Achse 104, 201 der teilchenoptischen Vorrichtung 101 befindet. Durch diese Öffnung hindurch wird der Primärteilchenstrahl 201 auf die Probenoberfläche 203 gerichtet. Je nach geometrischer Form

und/oder Abstrahlverhalten der Probe ist es auch denkbar, dass die Lichtaufnahmeelemente 202 nicht eine Halbkugel-Oberfläche bilden, sondern in einer anderen, die Probe überspannenden Form angeordnet sind.

Es hat sich als vorteilhaft erwiesen, wenn die Vorrichtung insgesamt zwei oder mehr Lichtaufnahmeelemente umfasst. Besonders vorteilhaft ist es, wenn die Vorrichtung sieben Lichtaufnahmeelemente umfasst, so dass entsprechend sieben Raumwinkelbereiche erfasst werden können. Es ist auch denkbar, dass die Vorrichtung zehn oder mehr als zehn, beispielsweise 100, Lichtaufnahmeelemente umfasst. Dabei ist jedoch zu beachten, dass mit steigender Zahl der Lichtaufnahmeelemente einerseits zwar die räumliche Auflösung verbessert wird, andererseits aber der auf das einzelne Lichtaufnahmeelement einfallende Strahlungsanteil verringert wird, so dass die Empfindlichkeit der Messanordnung verringert wird. Daher sollte die Zahl der Lichtaufnahmeelemente so gewählt werden, dass je nach Art der Applikation ein Kompromiss zwischen erreichbarer Auflösung und gewünschter Empfindlichkeit gefunden wird. Aus dem Probenmaterial 203 frei gesetzte Photonen werden von den Sammeloptiken 202 erfasst. Dabei erfasst jede Sammeloptik 202 die im zugeordneten Raumwinkelbereich 204 emittierte Photonen. Das bedeutet also, dass jede Sammeloptik 202 Photonen auffängt, die sich entlang von Flugbahnen 206 bewegen, die einem Raumwinkelbereich 204 entsprechen. Jedes der als Sammeloptik ausgebildeten Lichtaufnahmeelemente 202 ist mit einem Miniaturspektrometer 205 verbunden, so dass die jeweils mit einer Sammeloptik 202 aufgefangenen Photonen zu einem zugeordneten Miniaturspektrometer 205 weitergeleitet werden. Solche miniaturisierten Spektrometer 205 sind beispielsweise aus DE 10304312 bekannt. Der Raumbedarf eines Miniaturspektrometers 205 kann typischerweise kleiner als 125 mm³ sein. Aufgrund ihrer geringen Größe können die Miniaturspektrometer 205 nahe am Messpunkt, das heißt an der Stelle, an der der Primärteilchenstrahl auf die Probe auftrifft und die Lichtemission auslöst, platziert werden, so dass sie einerseits einen großen Raumwinkel erfassen können und andererseits weitere Detektoren, die beispielsweise Sekundärelektronen oder rückgestreute Elektronen detektieren, nicht abschatten. Die Integrationszeiten der Miniaturspektrometer 205 betragen üblicherweise einige Millisekunden. Die Miniaturspektrometer 205 können als Einkanal-Spektrometer oder Mehrkanalspektrometer, beispielsweise mit zwei, drei oder mehr Kanälen, ausgebildet sein.

Die Miniaturspektrometern 205 erzeugen Spektren des jeweils detektierten Lumineszenzlichts. Die erhaltenen Spektren werden an ein Analysesystem 207 weitergeleitet, gespeichert und ausgewertet. Bei einer alternativen Ausbildung dieser Ausführungsform werden die erzeugten Spektren in Miniaturspektrometern 205 gespeichert und ausgewertet.

Beiden Ausbildungen gemeinsam ist, dass die erhaltenen Spektren jeweils einem bestimmten Raumwinkelbereich der jeweiligen Photonenflugbahnen zugeordnet werden können. Somit ist es also möglich, das Lumineszenzlicht winkelaufgelöst zu detektieren und spektral zu analysieren. Die erhaltenen Spektren können dann auf Basis der chemischen Statistik (Chemometrie) mittels mathematischer Algorithmen verrechnet und mithilfe vorhandener Datenbanken analysiert und bewertet werden.

Da das Lumineszenzlicht jeweils nur am Auftreffort des Primärteilchenstrahls emittiert wird, kann darüber hinaus eine Ortsauflösung des Lumineszenz-Signals erreicht werden, wenn der Fokus des Primärteilchenstrahls senkrecht zu dessen optischer Achse zeitlich sequenziell über die Probenoberfläche geführt wird und das jeweils winkel- und spektral-aufgelöste Signal demjenigen Ort auf der Probe zugeordnet wird, auf den der Primärteilchenstrahl zum jeweiligen Zeitpunkt fällt.

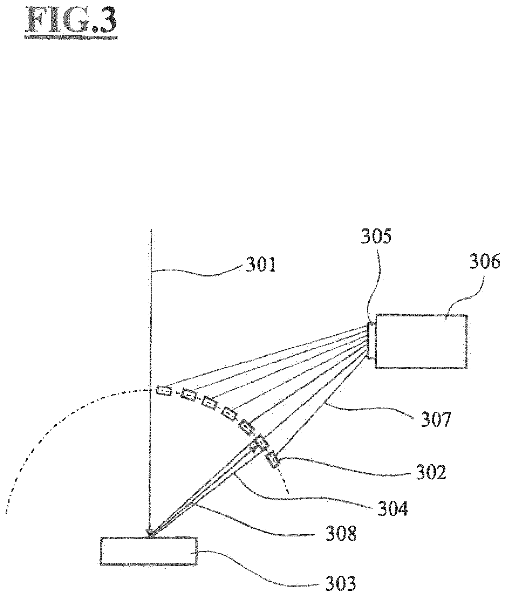

In einer weiteren vorteilhaften Ausführungsform, die in Figur 3 dargestellt ist und die nicht von der Erfindung umfasst ist, sind die Lichtaufnahmeelemente 302 als Lichteintrittsöffnungen von Lichtleitfasern 307 ausgebildet.

Die Lichtleitfasern 307 können einen Durchmesser zwischen 50 und 800 µm, vorzugsweise zwischen 80 bis 100 µm aufweisen. Es ist auch denkbar, dass die Lichtleitfasern 307 einen Durchmesser von weniger als 50 µm oder mehr als 800 µm aufweisen. Die Lichteintrittsöffnungen 302 sind auf der der Probe 303 zugewandten Seite der Lichtleitfasern 307 angeordnet. Jede Lichteintrittsöffnung 302 sammelt Licht auf, das ist einem Raumwinkelbereich 304 der Flugbahnen 303 emittiert wurde. Photonen, die von den Lichteintrittsöffnungen 302 aufgenommen worden sind, werden über Lichtleitfasern 307 zum Eintrittsspalt 305 eines Mehrkanalspektrometers 306 weitergeleitet. Das Mehrkanalspektrometer 306 kann vorzugsweise eine integrierte Auswerteeinheit umfassen. Das Mehrkanalspektrometer 306 kann zum Beispiel als Offner-Spektrometer mit beispielsweise 30 Kanälen ausgebildet sein, so dass 30 Spektren simultan aufgenommen werden können. Auch bei dieser Ausführungsform hat es sich als vorteilhaft erwiesen, wenn die Lichteintrittsöffnungen 302 auf der Oberfläche eines Kugelsegments angeordnet sind. Das bedeutet also, dass die Vielzahl der Lichteintrittsöffnungen 302 in ihrer Gesamtheit die Form eines Segments einer Kugelfläche nachbilden. Die einzelnen Lichteintrittsöffnungen 302 umfassen Sammeloptiken oder Freistrahloptiken. Wenn der Fokus des Primärteilchenstrahls 301 - wie bei Figur 2 beschrieben - zeitlich sequentiell über die Probenoberfläche geführt wird, können auch mit dieser Ausführungsform Spektren orts- und/oder winkelaufgelöst aufgenommen werden.

Weiterhin kann im verwendeten Mehrkanalspektrometer 306 zur Aufzeichnung von Spektren ein zeitauflösender Photonendetektor, beispielsweise ein PMD-Chip eingesetzt werden. Ein Photonic Mixer Device (kurz: PMD)-Chip ist ein opto-elektronischer Detektor, der sowohl Amplitude als auch Phase (also den zeitlichen Verlauf) eines empfangenen Lichtpulses oder von zeitlich moduliertem Licht erfasst. Durch Modulation der Anregungsenergie, beispielweise durch Aus- und Einschalten des Primärteilchenstrahls oder durch Änderung der Beschleunigungsspannung (und somit der mittleren Energie der Primärteilchen), können sich mit der Zeit verändernde spektrale Eigenschaften der emittierten Photonen erfasst und nachgewiesen werden. Das heißt also, dass das frei gesetzte Lumineszenzlicht zeitaufgelöst detektiert werden kann, wobei eine Zeitauflösung von 1 ns möglich ist. Der zeitauflösende Photonendetektor kann beispielsweise in Form eines Matrixsensors oder i eines Zeilensensors oder eines Punktsensors ausgebildet sein. Alternativ ist es denkbar, die Zeitauflösung zu erreichen, indem beispielweise die Anregung in Form eines Kurzpulses gegeben wird und die resultierende Lumineszenz-Antwort zeitabhängig detektiert wird. Eine andere Möglichkeit ist es, das emittierte Lumineszenz-Signal mithilfe einer spektrometrischen Messanordnung, die einen schnellen Shutter am Eintrittsspalt umfasst, zeitaufgelöst zu erfassen.

Eine weitere vorteilhafte Ausführungsform umfasst ein erstes Spektrometer, das den Strahlungsanteil ausnutzt, der in höherer Ordnung, also beispielsweise erster, zweiter oder dritter Ordnung, gebeugt wird, sowie ein zweites Spektrometer, das den Strahlungsanteil der nullten Ordnung ausnutzt. Durch Nutzung der Strahlung der nullten Ordnung kann das zweite Spektrometer zur gleichen Zeit wie das erste Spektrometer betrieben werden, ohne dass dabei das erste Spektrometer an Leistung verliert. Das ist deshalb möglich, weil die in das erste Spektrometer einfallende Lichtmenge nicht vermindert wird und somit das erste Spektrometer durch den Betrieb des zweiten Spektrometers nicht in einer Funktion beeinträchtigt wird. Als vorteilhaft hat es sich erwiesen, wenn das erste Spektrometer beispielsweise einen Wellenlängenbereich von 350 nm - 1700 nm erfasst, während das zweite Spektrometer einen schmaleren Wellenlängenbereich, z.B. 360 nm - 780 nm erfasst und mit einer höheren Auflösung als das erste Spektrometer arbeitet. Die Erfindung ist jedoch nicht auf dieses Ausführungsbeispiel begrenzt, da die Eigenschaften des ersten und des zweiten Spektrometers je nach Aufgabenstellung gewählt werden können. So ist beispielsweise auch denkbar, dass benachbarte Wellenlängenbereiche vom ersten und vom zweiten Spektrometer erfasst werden, indem das erste Spektrometer einen ersten Wellenlängenbereich erfasst und das zweite Spektrometer einen zweiten Wellenlängenbereich erfasst, wobei der erste und der zweite Wellenlängenbereich verschieden und aneinander anschließend oder nicht aneinander anschließend sind.

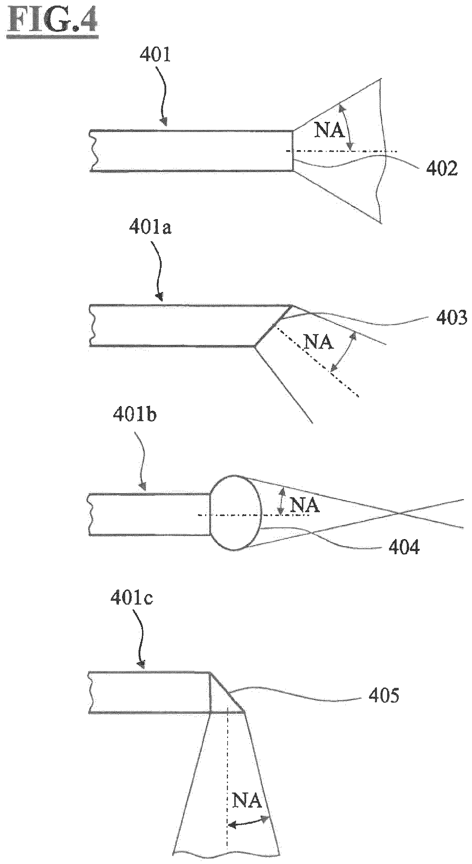

Im Gegensatz zu herkömmlichen Spektrometern, bei denen die spektrometrische Messung zur Referenzierung unterbrochen werden muss, ist es außerdem möglich, die Spektren simultan und parallel zu referenzieren. Die geschieht, indem mehrere Kanäle verwendet werden, so dass separate Kanäle für die Referenzierung verwendet werden können. Dies kann dadurch geschehen, dass der Lichtstrahl verlustfrei oder annähernd verlustfrei aufgespalten wird - beispielweise mittels eines dichroitischen Spiegels -, so dass ein Teil des Lichts der spektrometrischen Messung zugeführt wird, während ein anderer Teil des Lichts dazu dient, die Referenzierung auszuführen. Dies kann dadurch geschehen, dass mit Hilfe eines externen Standards, dessen Lumineszenz-Verhalten bekannt ist, Minimalwert und Maximalwert der Messanordnung eingestellt werden. Alternativ kann die Probe selbst als interner Referenzstandard genutzt werden. Dazu werden Lumineszenz-Signale, die von der Probe emittiert wird, die aber nicht Gegenstand der eigentlichen Analyse sind, dazu benutzt, um die Messanordnung für die Untersuchung einzustellen und/oder unerwünschte Systemänderungen zu kompensieren. Wie in Figur 4 dargestellt, können die Lichteintrittsöffnungen 402, 403, 404, 405 der Lichtleitfasern 401, 401a, 401b, 401c verschiedenartig ausgebildet sein, beispielsweise als polierte Faserstirnfläche 402, als schräg stehende polierte Faserstirnfläche 403, als Kugeloptik 404 oder als Prisma 405. Im einfachsten Fall, der polierten Faserstirnfläche 402, ist das Faser-Ende gerade abgeschnitten und poliert ausgeführt. Alternativ kann das Faser-Ende in einem Winkel schräg abgeschnitten und poliert sein, so dass eine schräg stehende polierte Faserstirnfläche 403 entstanden ist. Vorteilhafterweise sollte der Winkel in Abhängigkeit vom verwendeten Material so gewählt sein, dass keine störenden Effekte wie zum Beispiel Totalreflexionen auftreten. Unter Kugeloptik 404 ist zu verstehen, dass das Faser-Ende als kugelförmige oder halbkugelförmige Linse oder auch mit einer asphärischen Optik ausgebildet ist. Beim Prisma 405 ist das Faser-Ende als Prismenoptik ausgebildet. Die verschiedenen Ausformungen 402, 403, 404, 405 unterscheiden sich in der erreichbaren numerischen Apertur (NA), die typischerweise zwischen 0,22 und 0,44 liegen kann.

Es hat sich als vorteilhaft erwiesen, wenn die verschiedenen Ausbildungen der Lichteintrittsöffnungen in einer Detektionsvorrichtung kombiniert werden. Dabei sollte die Ausbildung jeder einzelnen Lichteintrittsöffnung in Abhängigkeit vom Ort auf dem Kugeloberflächensegment, an dem sich diese Lichteintrittsöffnung befindet, derart gewählt sein, dass die Gesamtheit der Lichteintrittsöffnungen das vom Probenmaterial abgestrahlte Licht möglichst effizient auffängt.

In einer besonders vorteilhaften Ausführungsform sind die Lichteintrittsöffnungen - unabhängig von der jeweiligen Ausbildung - entspiegelt. Die Entspiegelung kann beispielsweise durch das Aufbringen einer mikrostrukturierten Oberfläche oder einer geeigneten Beschichtung erreicht werden.

Eine zusätzliche Metallisierung der Oberflächen der Lichtleitfasern durch Aufdampfen oder Sputtern von beispielsweise Aluminium oder Gold hat den vorteilhaften Effekt, dass die Lichtleitfasern elektrisch leitfähig werden, so dass auf diese Weise unerwünschte elektrische Aufladungen der Bauteile beim Betrieb der teilchenoptischen Vorrichtung verhindert werden können. Alternativ kann die elektrische Leitfähigkeit der Lichtleitfasern durch Beschichtung mit Indiumzinnoxid (ITO) erreicht werden, so dass man eine leitfähige Oberflächenbeschichtung erhält, die zudem transparent ist.

Eine weitere vorteilhafte Ausführungsform ist in Figur 5a (Draufsicht) und Figur 5b (Schnittansicht) dargestellt, die nicht von der Erfindung umfasst sind. In dieser Ausführungsform sind die in Figur 4 dargestellten verschiedenen Ausbildungen der Lichteintrittsöffnungen derart kombiniert, dass eine plane Struktur entsteht, mit der eine winkelaufgelöste Detektion möglich ist. Dabei sind die Lichtaufnahmeelemente so angeordnet, dass die Gesamtheit der vielen Lichtaufnahmeelemente in einer Ebene angeordnet ist. Dies hat den Vorteil, dass die Detektionsvorrichtung 105 platzsparend in die teilchenoptische Vorrichtung 101 eingebaut werden kann, beispielsweise zwischen Probe 103, 502 und teilchenoptischer Säule 106. In der ebenen Ausformung ist - vorzugsweise im oder nahe am Zentrum der planen Struktur - eine Öffnung 503 ausgespart, die sich in der Verlängerung der optischen Achse 104 der teilchenoptischen Vorrichtung 101 befindet. Durch diese Öffnung 503 hindurch ist der Primäreilchenstrahl auf die Oberfläche der Probe 502 gerichtet. Über Lichtleitfasern 501 werden die von den Lichteintrittsöffnungen aufgenommenen Photonen wie bereits beim Ausführungsbeispiel in Figur 3 beschrieben, zum Eintrittsspalt 504 eines Mehrkanalspektrometers 505, das eine Auswerteeinheit umfassen kann, geleitet und dort analysiert.

In Figur 6 ist eine weitere vorteilhafte Ausführungsform in der Schnittansicht dargestellt. Bei dieser Ausführungsform umfasst die Detektionsvorrichtung 105 eine Vielzahl von Lichtaufnahmeelementen 602, von denen beispielhaft zwei Lichtaufnahmeelemente 602 dargestellt sind. Die Lichtaufnahmeelemente 602 sind als Sammeloptiken ausgebildet und mit Miniaturspektrometern verbunden. Die Sammeloptiken der Miniaturspektrometer 602 sind in einer Ebene über der Probe 603 angeordnet. Durch die Nutzung von Spiegeln 604 und das Ausnutzen des Scheimpflug-Effekts ist es möglich, mit dieser planen Anordnung von Lichtaufnehmelementen 602 und Miniaturspektrometern Photonen, die emittiert werden, wenn der Primärteilchenstrahl 601 auf die Probe 603 auftrifft, winkelaufgelöst zu detektieren. Die Detektionsvorrichtung umfasst Spiegel 604, die derart angeordnet sind, dass Photonen so abgelenkt werden, dass sie auf einer Sammeloptik auftreffen und detektiert werden. Um den Effekt nach Scheimpflug auszunutzen, sind die Hauptebene der Sammeloptik des jeweiligen Miniaturspektrometers und die Bildebene des Miniaturspektrometers in einem bestimmten Winkel zueinander gekippt, so dass sich Probenebene, Hauptebene der Sammeloptik und Bildebene des Miniaturspektrometers in einer gemeinsamen Geraden schneiden. Wenn diese Bedingung erfüllt ist, kann auch dann, wenn die Probenebene im Verhältnis zur Bildebene des Miniaturspektrometers schräg steht, die Probe 603 in weiten Bereichen fokussiert abgebildet werden. Auch bei dieser Ausführungsform ist besonders vorteilhaft, dass die Detektionsvorrichtung raumsparend in die teilchenoptische Vorrichtung 101 eingebaut werden kann, beispielweise zwischen teilchenoptischer Säule 106 und Probe 603.

In Figur 7 ist die erfindungsgemäße Vorrichtung dargestellt, bei der die Zahl der Elemente im Strahlengang minimiert ist, so dass das Lumineszenzlicht besonders effizient genutzt werden kann. Die Detektionsvorrichtung 105 umfasst eine Teilchenstrahlquelle, ein abbildendes Gitter 702 und einen Detektor 704. Das abbildende Gitter 702 kann als konkave Halbkugelfläche ausgebildet sein.

Vorteilhafterweise weist die Halbkugelfläche eine erfindungsgemäße Öffnung 703 auf, die der Primärteilchenstrahl 701 durchdringen kann, um dann auf die unter dem abbildenden Gitter 702 liegende Probe 705 aufzutreffen. In einer alternativen Ausführungsform ist das abbildende Gitter 702 lediglich als Segment 706 einer Halbkugelfläche ausgebildet. Das abbildende Gitter 702 ist bei beiden Ausführungsformen so angeordnet, dass von der Probe 705 frei gesetzte Photonen dispergiert werden, so dass ein Spektrum erzeugt wird. Das erzeugte Spektrum wird von einem Detektor 704 detektiert und gespeichert. Die Komponenten der Detektionsvorrichtung 105 sind also derart angeordnet und ausgebildet, dass wenn der Primärteilchenstrahl 701 auf der Probe 705 auftrifft, Lumineszenzlicht in alle Raumrichtungen emittiert wird. Dabei wird ein erster Teilstrahl 707 des Lumineszenzlichts am Gitter 702 reflektiert und in Form eines zweiten Teilstrahls 708 in Richtung auf den Detektor 704 gelenkt, so dass der zweite Teilstrahl 708 auf der Detektorfläche 704 auftrifft. Dabei treffen Teilstrahlen 707, die in unterschiedlichen Raumwinkelbereichen von der Probe 705 abgestrahlt wurden, auf unterschiedlichen Orten der Detektorfläche 704 auf und werden dort detektiert. Andererseits werden von der Probe 705 abgestrahlte Teilstrahlen 707 am Gitter dispergiert, so dass sie - aufgespalten in ihre Wellenlängen - auf der Detektorfläche 704 auftreffen und spektral analysiert werden. Dies geschieht unabhängig vom Auftreffort auf der Probe 705. Der Detektor 704 kann als Zeilendetektor oder als Matrixdetektor ausgebildet sein, wobei die Verwendung eines Matrixdetektors eine Ortsauflösung erlaubt. Durch die Ortsauflösung des Matrixdetektors 704 kann somit das aus der Probe 705 austretende Lumineszenzlicht winkelaufgelöst detektiert und erfasst werden, da in unterschiedliche Raumwinkelbereiche abgestrahltes Lumineszenzlicht durch das Gitter 702 auf unterschiedliche Orte des Matrixdetektors 704 gelenkt wird.

Charakteristikum des erfindungsgemäßen Ausführungsbeispiels ist, dass die Zahl der Elemente im Strahlengang minimiert worden ist, da die Licht-emittierende Stelle auf der Probe 705 gleichzeitig den Eintrittsspalt einer spektrometrischen Messanordnung darstellt. Die spektrometrische Messanordnung umfasst die Probe (als Eintrittsspalt) 705, das abbildende Gitter 702 und den Detektor 704. Auf diese Weise kann das Lumineszenzlicht mit größtmöglicher Effizienz genutzt werden.

Alternativ zu der beschriebenen besonders vorteilhaften sphärischen Ausbildung kann das abbildende Gitter 702 asphärisch ausgebildet sein. Als vorteilhaft hat es sich außerdem erwiesen, wenn das abbildende Gitter 702, unabhängig von der Form der Ausbildung, holographisch hergestellt worden ist.

Figur 8 zeigt das Flussdiagramm eines nicht erfindungsgemäßen Verfahrens zur spektroskopischen Analyse von Proben. In einem ersten Schritt 801 wird ein auf die Probe gerichteter Primärteilchenstrahl erzeugt. Der Primärteilchenstrahl kann ein Elektronenstrahl und/oder ein Ionenstrahl sein. Der Primärteilchenstrahl trifft auf der Probe auf und setzt aufgrund der Wechselwirkung zwischen Primärteilchenstrahl und Probenmaterial Photonen aus der Probe frei. Die frei gesetzten Photonen können sich entlang einer Vielzahl möglicher Flugbahnen bewegen, wobei jede der möglichen Flugbahnen n durch einen Höhenwinkel hn und einen azimutalen Winkel an charakterisiert ist und gleiche oder ähnliche Flugbahnen zu Raumwinkelbereichen der Flugbahnen zusammengefasst werden. Im nächsten Schritt 802 werden die frei gesetzten Photonen von einer Vielzahl von Lichtaufnahmeelementen gleichzeitig aufgefangen, wobei jedes einzelne Lichtaufnahmeelement einen Raumwinkelbereich der Flugbahnen erfasst. Im nächsten Schritt 803 werden die aufgefangenen Photonen zu einem Analysesystem weitergeleitet. Das Analysesystem umfasst eine Vielzahl von Auswerteeinheiten, so dass jedem Lichtaufnahmeelement eine Auswertereinheit zugeordnet ist. Das Analysesystem kann ein Mehrkanalspektrometer umfassen, d.h. ein Spektrometer, mit dem gleichzeitig mehrere komplette Spektren aufgezeichnet werden, oder eine Vielzahl von miniaturisierten Spektrometern. In Schritt 804 werden optische Spektren derart aufgezeichnet, dass für jedes Lichtaufnahmeelement ein Spektrum anhand der von diesem Lichtaufnahmeelement aufgefangenen Photonen erzeugt wird. Das heißt also, dass jedes aufgezeichnete Spektrum einem Raumwinkelbereich der Flugbahnen entspricht. Es wird also Kathodolumineszenzlicht über eine Vielzahl verschiedener Raumwinkelbereiche getrennt detektiert, wobei eine Vielzahl vorteilhafter Weise zehn oder mehr Raumwinkelbereiche sein kann. In einem folgenden optionalen Schritt 805 werden die aufgezeichneten optischen Spektren ausgewertet. Die geschieht vorzugsweise computergestützt, da große Datenmengen verarbeitet werden müssen. Vorteilhaft ist es, wenn bereits Vergleichsspektren in einer Datenbank gespeichert vorliegen, mit denen die neu erhaltenen Spektren verglichen werden können. Es ist außerdem denkbar, diese Datensammlung durch die neu erhaltenen und ausgewerteten Spektren zu ergänzen und zu erweitern, so dass die für das Verfahren verwendete Vorrichtung für eine bestimme Anwendung vom Benutzer kalibriert werden kann.

Da die Spektren winkelaufgelöst und/oder zeitaufgelöst und/oder ortsaufgelöst gewonnen werden können, ist es möglich, eine mehrdimensionale chemometrische Auswertung durchzuführen. Dabei liefert die Winkelauflösung Informationen über Materialeigenschaften und Textur der Proben, auch aus unterschiedlichen Probentiefen. Die Zeitauflösung liefert Informationen über die Kinetik der Lumineszenzreaktion, was wiederum Rückschlüsse auf die Materialeigenschaften des Probenmaterials zulässt. Da die Abstrahlung von Lumineszenzlicht durch die Oberflächentopographie der Probe beeinflusst wird, können Rückschlüsse auf die Probentopographie gezogen werden.

Die bei der Auswertung angewendeten Methoden sind abhängig von der jeweiligen Probe und der jeweiligen Fragestellung. Die Mehrdimensionalität der Daten erfordert eine computergestützte Auswertung, wobei verschiedene Methoden bekannt sind, z.B. in Naes, T. et al. (2002): "A User-Friendly Guide to Multivariate Calibration and Classification", NIR Publications, Chichester, UK und in Marini, F et al.: "Artificial Neural Networks in Chemometrics: History, Examples and Perspectives", Nemi (RM), 2-4 October, 2006, Italy beschrieben wurden, so beispielsweise Multivariate statistische Methoden, Diskriminanz- und Clusteranalyse, Multiple Lineare Regression, Principal Component Regression, Principal Component Analysis, Multivariate Curve Analysis, Wavelet-Transformation, Genetische Algorithmen, Neuronale Netze oder Support-Vector-Machines. Die Auswertung erfolgt dabei derart, dass die gewonnenen Ergebnisse nutzerfreundlich dargestellt werden können.

Alle bisher beschriebenen Ausführungsformen beschränken sich nicht auf die Detektion von Photonen, die durch Kathodolumineszenz erzeugt worden sind. Es ist auch denkbar, mit Hilfe eines fokussierten Ionenstrahls Lumineszenzphänomene auszulösen und gemäß der Erfindung zu detektieren. Ein solcher fokussierter Ionenstrahl kann beispielsweise mit einer Galliumionenquelle erzeugt werden, wobei die emittierten Galliumionen beschleunigt und mithilfe geeigneter Linsensysteme gebündelt werden, so dass sie als fokussierter Ionenstrahl auf der Probenoberfläche auftreffen. Alternativ können andere Ionenquellen, beispielsweise eine Helium-Gasfeldionenquelle, eingesetzt werden.

### Bezugszeichenliste

- 101: Teilchenoptische Vorrichtung
- 102: Probenkammer
- 103: Probe
- 104: Optische Achse
- 105: Detektionsvorrichtung
- 106: Teilchenoptische Säule
- 107: Analysesystem
- 108: Detektor
- 109: Teilchenstrahlquelle
- 110: Linsensystem
- 111: Linsensystem
- 112: Aperturblende
- 113: Ablenksystem

- 201: Primärteilchenstrahl
- 202: Lichtaufnahmeelement mit Sammeloptik
- 203: Probe
- 204: Raumwinkelbereich einer Flugbahn
- 205: Miniaturspektrometer
- 206: Flugbahn
- 207: Analysesystem
- 208: Wand der Probenkammer
- 209: Probenkammer
- 210: Zwischenfläche

- 301: Primärteilchenstrahl
- 302: Lichtaufnahmeelement mit Lichteintrittsöffnung
- 303: Probe
- 304: Raumwinkelbereich einer Flugbahn
- 305: Eintrittsspalt
- 306: Mehrkanalspektrometer
- 307: Lichtleitfaser
- 308: Flugbahn

- 401: Lichtleitfaser
- 401a: Lichtleitfaser
- 401b: Lichtleitfaser
- 401c: Lichtleitfaser
- 402: Faserstirnfläche
- 403: Schräge Faserstirnfläche
- 404: Faser-Ende mit Kugeloptik
- 405: Faser-Ende mit Prisma
- NA: Numerische Apertur

- 501: Lichtleitfaser
- 502: Probe
- 503: Öffnung
- 504: Eintrittsspalt
- 505: Mehrkanalspektrometer
- 506: Flugbahn

- 601: Primärteilchenstrahl
- 602: Miniaturspektrometer
- 603: Probe
- 604: Spiegel

- 701: Primärteilchenstrahl
- 702: Abbildendes Gitter
- 703: Öffnung
- 704: Detektor
- 705: Probe
- 706: Halbkugelsegment
- 707: Erster Teilstrahl
- 708: Zweiter Teilstrahl
- 801: Schritt: Erzeugen eines Primärteilchenstrahls
- 802: Schritt: Auffangen von Photonen
- 803: Schritt: Weiterleiten von Photonen
- 804: Schritt: Aufzeichnen von Spektren
- 805: Schritt: Auswerten von Spektren

## Patentansprüche

1. Vorrichtung (105) zur spektrometrischen Analyse einer licht-emittierenden Probe (705), umfassend
a) ein abbildendes Gitter (702), das so angeordnet ist, dass Photonen, die von der Probe (705) freigesetzt werden, dispergierbar sind und
b) einen Detektor (704) zur Detektion eines durch Dispersion erzeugten Spektrums, der angeordnet ist, von der Probe abgestrahlte Photonen zu detektieren, sowie
c) eine Teilchenstrahlquelle (109), die eingerichtet ist, einen Primärteilchenstrahl (701) aus elektrisch geladenen Teilchen zu erzeugen, der auf die Probe gerichtet ist;
**dadurch gekennzeichnet,**
**dass** das abbildende Gitter (702) eine Öffnung (703) aufweist, die vom Primärteilchenstrahl (701) durchdringbar ist, so dass der Primärteilchenstrahl (701) auf die Probe (705) auftreffen kann.

2. Vorrichtung (105) nach Anspruch 1, wobei der Detektor (704) als Zeilen- oder Matrixdetektor ausgebildet ist.

3. Vorrichtung (105) nach einem der Ansprüche 1 oder 2, wobei das abbildende Gitter (702) als mindestens ein Segment einer Halbkugelfläche (706) ausgebildet ist.

4. Vorrichtung (105) nach einem der Ansprüche 1 bis 3, wobei das Analysesystem ein erstes und ein zweites Spektrometer umfasst und das zweite Spektrometer den Strahlungsanteil ausnutzt, der im ersten Spektrometer in der nullten Ordnung gebeugt wird.

## Claims

1. Device (105) for spectrometric analysis of a light-emitting sample (705), comprising
a) an imaging grating (702) arranged such that photons released by the sample (705) are dispersible and
b) a detector (704) for detecting a spectrum produced by dispersion, said detector being arranged to detect photons emitted by the sample, and also
c) a particle beam source (109) configured to produce a primary particle beam (701) made of electrically charged particles, said primary particle beam being directed at the sample;
**characterized**
**in that** the imaging grating (702) comprises an opening (703) through which the primary particle beam (701) is able to pass so that said primary particle beam (701) can be incident on the sample (705).

2. Device (105) according to Claim 1, wherein the detector (704) is in the form of a line or matrix detector.

3. Device (105) according to either of Claims 1 and 2, wherein the imaging grating (702) is in the form of at least one segment of a hemispherical surface (706).

4. Device (105) according to any one of Claims 1 to 3, wherein the analysis system comprises a first and a second spectrometer and the second spectrometer utilizes the radiation component that is diffracted in the zeroth order in the first spectrometer.

## Revendications

1. Dispositif (105) d'analyse spectrométrique d'un échantillon photoémetteur (705), ledit dispositif comprenant
a) un réseau de reproduction (702) qui est disposé de façon à permettre la dispersion de photons libérés par l'échantillon (705) et
b) un détecteur (704) destiné à détecter un spectre qui est généré par dispersion et qui est destiné à détecter des photons émis par l'échantillon, et
c) une source de faisceau de particules (109) qui est conçue pour générer à partir de particules chargées électriquement un faisceau de particules primaire (701) qui est dirigé sur l'échantillon ;
**caractérisé en ce que**
la grille de reproduction (702) comporte une ouverture (703) par laquelle le faisceau de particules primaire (701) peut passer de sorte que le faisceau de particules primaire (701) puisse être incident à l'échantillon (705).

2. Dispositif (105) selon la revendication 1, le détecteur (704) étant conçu sous la forme d'un détecteur linéaire ou matriciel.

3. Dispositif (105) selon l'une des revendications 1 ou 2, le réseau de reproduction (702) étant conçu sous la forme d'au moins un segment d'une surface hémisphérique (706).

4. Dispositif (105) selon l'une des revendications 1 à 3, le système d'analyse comprenant un premier et un deuxième spectromètre et le deuxième spectromètre utilisant la composante de rayonnement qui est diffractée à l'ordre zéro dans le premier spectromètre.
